# EUROPÄISCHE PATENTANMELDUNG

(11) **EP 4 600 718 A2**
(43) Veröffentlichungstag der Anmeldung: **13.08.2025**
(21) Anmeldenummer: 25184283.7
(22) Anmeldetag: 28.02.2023
(51) Int. Cl.: G02B 27/09

(54) **AUSHÄRTUNG EINES LINERS MITTELS LASER**

(62) Teilanmeldung aus: 23159005.0
(71) Anmelder: SAERTEX multiCom GmbH, 48369 Saerbeck (DE)
(72) Erfinder: Füchtjohann, Nils, 48268 Greven (DE); Wolf, Eugen, 49090 Osnabrück (DE)
(74) Vertreter: Michalski Hüttermann & Partner Patentanwälte mbB

(57) **Zusammenfassung**

Die Erfindung betrifft ein Verfahren zum Aushärten eines Liners zur Sanierung von Rohren oder Kanälen, bei dem Laserlicht aus Aushärtung eines harzgetränkten Liners eingesetzt wird, und die Verwendung eines Axicon zur Erzeugung eines ringförmigen Strahlprofils eines Lasers zur Aushärtung eines Liners zur Sanierung von Rohren oder Kanälen.

## Beschreibung

Die Erfindung betrifft ein Verfahren zum Aushärten eines Liners zur Sanierung von Rohren oder Kanälen, bei dem ein Laserstrahl zur Aushärtung eines harzgetränkten Liners eingesetzt wird, und die Verwendung eines Axicon zur Erzeugung eines ringförmigen Strahlprofils eines Lasers zur Aushärtung eines Liners zur Sanierung von Rohren oder Kanälen.

Die Verwendung von Lasern bei der Sanierung von Rohren und Kanälen, wobei der Laser zur Aushärtung eines harzgetränkten Faserschlauchs eingesetzt wird, ist beispielsweise bereits aus der EP4017906A1 bekannt. Die bisher bekannten Verfahren haben allerdings den Nachteil, dass die Laserquelle direkt auf die Innenwand des auszuhärtenden Liners gerichtet werden musste. Dies hat die Vorrichtung, die zur Aushärtung nötig ist, sehr umständlich und teuer gemacht.

WO9851960A1 beschreibt die Aushärtung eines Liners mittels Laser, wobei ein Härtungsmittel verkapselt ist und die Kapseln das Härtungsmittel durch Lasereinstrahlung freisetzen. Das Härtungsmittel ist kein Photoinitiator. Die Kapseln müssen dabei das Laserlicht absorbieren.

Bisher herrschte das Vorurteil, dass es besonders schwierig ist, einen Liner mit einem harzgetränkten Faserschlauch mittels Laser auszuhärten. Beispielsweise wird in der EP4017906A1 und WO9851960A1 beschrieben, dass die Laserquelle selbst auf die Innenseite des Liners gerichtet werden kann oder das Laserlicht über einen rotierenden Spiegel auf die Innenseite des Liners fällt. Diese Verfahren haben sich bisher am Markt nicht dursetzen können.

Die Aufgabe der vorliegenden Erfindung besteht also darin, eine einfachere Technologie bereitzustellen, mit Hilfe von Laserlicht einen Liner zur Sanierung von Rohren oder Kanälen auszuhärten.

In einer ersten Ausführungsform wird die der Erfindung zu Grunde liegende Aufgabe durch ein Verfahren zum Aushärten eines Liners zur Sanierung von Rohren oder Kanälen gelöst, bei dem man folgende Schritte ausführt:
a. Einbringen eines Liners umfassend wenigstens einen harzgetränkten Faserschlauch in das zu sanierende Rohr oder den zu sanierenden Kanal,
b. Aufstellen des Liners durch Andrücken des Liners an die Innenwand des zu sanierenden Rohrs oder Kanals, und
c. Aushärten des Harzsystems im harzgetränkten Faserschlauch, indem man eine Vorrichtung durch den aufgestellten Liner bewegt, wobei in der Vorrichtung Laserlicht durch wenigstens eine Optik in einem Winkel von 0,5 bis 179° relativ zum einfallenden Laserstrahl so abgelenkt wird, dass das Laserlicht auf die Innenwand des aufgestellten Liners trifft und so das Harzsystem im Faserschlauch aushärten kann.

Durch die Vorrichtung ist es möglich, die Quelle des Laserlichtes außerhalb des Liners zu positionieren und das beispielsweise in Längsrichtung des Liners einstrahlende Laserlicht im aufgestellten Liner auf die Innenwand zum Aushärten des Harzsystems abzulenken.

Ein wichtiger Vorteil des Einsatzes von Laserlicht im erfindungsgemäßen Verfahren gegenüber den Verfahren, die herkömmliche Lichtquellen (wie beispielsweise Quecksilberlampen, keine Laser) einsetzen ist beispielsweise, dass der Intensitätsverlust bisher quadratisch mit dem Abstand einherging, während der Intensitätsverlust bei Einsatz eines Lasers näherungsweise linear mit dem Abstand einhergeht. Ferner kann die Farbe des Laserlichts bestmöglich an die optischen Bedingungen zur Aushärtung des Liners angepasst werden.

Das erfindungsgemäße Verfahren erlaubt ein einfacheres Handling, eine geringere Investition, eine bessere Kontrolle der Aushärtung und besseren Arbeitsschutz (beispielsweise keine Gefahr mehr durch elektrische Schläge durch hohe Zündspannungen oder implodierende Hochdrucklampen).

### Verfahren

Das Einbringen des Liners in Schritt a. kann entweder durch Einzug des Liners in das Rohr oder den Kanal oder alternativ durch Inversion in das Rohr oder den Kanal erfolgen.

Das Aufstellen des Liners in Schritt b. kann beispielsweise durch Beaufschlagung des Liners mit einem Fluid (wie beispielsweise Druckluft, Dampf oder Wasser) erfolgen.

Das Aushärten in Schritt c. kann beispielsweise thermisch oder lichthärtend erfolgen. Findet das Aushärten thermisch statt, so kann beispielsweise ein thermisch zerfallender Initiator im Harzsystem enthalten sein. Findet das Aushärten lichthärtend statt, so kann beispielsweise ein oder mehrere durch Licht zerfallender Initiatoren im Harzsystem enthalten sein.

Die Vorrichtung wird in Schritt c. vorzugsweise mit einer Geschwindigkeit in einem Bereich von 0,1 bis 5.000 cm pro Minute, besonders bevorzugt 0,2 bis 1.000 cm pro Minute, durch den Liner bewegt.

Bei dem Verfahren wird die Optik in Schritt c. vorzugsweise in der Nähe der Symmetrieachse des aufgestellten Liners entlang des Liners bewegt. Insbesondere weicht die Position der Optik in Schritt c. im Median weniger als 50%, ganz besonders bevorzugt weniger als 10%, des Innendurchmessers des aufgestellten Liners, von der Symmetrieachse ab.

### Harzsystem

Vorzugsweise handelt es sich bei dem erfindungsgemäßen Harzsystem um ein Harzsystem für die Aushärtung von Linern. Beispielsweise kann es sich um ein Harzsystem aus ungesättigtem Polyester, Vinylester oder um ein Epoxidharzsystem handeln. Das erfindungsgemäße Harzsystem kann vorzugsweise auch thermische Initiatoren, wie beispielsweise Azoverbindungen oder Peroxide, enthalten. Vorzugsweise wird allerdings kein Benzoylperoxid als thermischer Initiator eingesetzt, da es umweltgefährlich ist.

Vorzugsweise enthält das Harzsystem Tonpartikel in einer Menge von höchstens 1 Gew.%, ganz bevorzugt keine Tonpartikel.

Vorzugsweise enthält das Harzsystem Naturfasern in einer Menge von höchstens 1 Gew.%, ganz bevorzugt keine Naturfasern.

Es können auch weitere Füllstoffe (beispielsweise Aluminiumhydroxid oder Calciumcarbonat) und Additive enthalten sein.

Das Harzsystem enthält vorzugsweise Initiatoren für die Polymerisation in einer Menge in einem Bereich von 0,01 bis 5 Gew.%, besonders bevorzugt 0,05 bis 1 Gew.%. Der Initiator kann ein Photoinitiator oder ein thermischer Initiator sein oder eine Mischung aus Photoinitiator und thermischer Initiator.

Vorzugsweise liegt zumindest ein Absorptionsmaximum des Photoinitiators in einem Bereich von 250 bis 600 nm vor, ganz besonders bevorzugt in einem Bereich von 400 bis 500 nm.

### Vorrichtung

Mit der Optik ist vorzugsweise eine Lichtleitung, besonders bevorzugt ein Glasfaserkabel, verbunden, die das Laserlicht von einer Laserquelle zur Optik leitet.

Die Laserquelle kann vorzugsweise außerhalb des Liners positioniert sein.

Die Vorrichtung kann beispielsweise eine Drohne (beispielsweise eine Flugdrohne) sein. An der Flugdrohne ist dann vorzugsweise die Optik montiert. Die Optik an der Flugdrohne kann beispielsweise durch die Lichtleitung mit der Laserquelle verbunden sein.

Die Vorrichtung kann auch beispielsweise ein Wagen sein, an dem die Optik montiert ist. Der Wagen kann beispielsweise Räder aufweisen. Die Optik an dem Wagen kann beispielsweise durch die Lichtleitung mit der Laserquelle verbunden sein.

### Laserlicht

Das Laserlicht kann vorzugsweise durch wenigstens einen Laser erzeugt werden. Es können auch mehrere Laser zur Erzeugung des Laserlichts eingesetzt werden. Wenn mehrere Laser eingesetzt werden, so können wenigstens 2 der mehreren Laser Laserlicht mit unterschiedlichen Wellenlängen emittieren. Dies hätte den Vorteil, dass verschiedene Initiatoren oder verschiedene Absorptionsbanden eines Initiators angesprochen werden können.

Der Durchmesser des auf die Optik einfallenden Laserstrahls liegt vorzugsweise in einem Bereich von 0,1 bis 50 mm (ganz besonders bevorzugt 1 bis 10 mm).

Die Wellenlänge des Laserlichts (vor allem des Laserlichts, das in die Optik eintritt) liegt vorzugsweise in einem Bereich von 200 bis 2200 nm, besonders bevorzugt in einem Bereich von 325 bis 600 nm, ganz besonders bevorzugt in einem Bereich von 400 bis 500 nm. Dieser Bereich ist besonders vorteilhaft, da die bisherigen Harzsysteme und Liner für die Sanierung von Rohren und Kanälen darauf optimiert sind, dass sie in diesem schmalen Fenster der Wellenlängen eine besonders hohe Transmission aufweisen. Die meisten Liner weisen unterhalb von etwa 300 nm ein Maximum des Transmissionsverlustes auf, so dass eine Wellenlänge unterhalb von 325 nm nicht vorteilhaft ist.

Es kann bevorzugt sein, dass mit wenigstens einem Laser ein Laserlicht mit einer Wellenlänge in einem Bereich von 975 bis 1800 nm erzeugt wird, und das Laserlicht vor dem Eintritt in die Optik mit Hilfe eines Frequenzkonverters in ein Laserlicht mit einer Wellenlänge in einem Bereich von 325 bis 600 nm umgewandelt wird.

Alternativ kann also bevorzugt sein, dass das durch den wenigstens einen Laser erzeugte Laserlicht eine Wellenlänge in einem Bereich von 975 bis 1800 nm, besonders bevorzugt in einem Bereich von 1200 bis 1500 nm, aufweist. Das Laserlicht ist dann beispielsweise ein infrarotes Laserlicht. Der Vorteil der Alternative liegt bei den Leistungsverlusten und Kosten bei der Glasfaser. Während Fasern für die Leitung von UV-Laserlicht vergleichsweise kostspielig sind und mit nicht unerheblichen Leistungsverlusten verbunden sind (beispielsweise10-30% bei 100m; >6 dB / km), sind Fasern für die Leitung von infrarotem Laserlicht kostengünstig und sehr verlustarm (<0,1% auf 1.000 m; < 1 dB / km). Das ist der gleiche Grund, warum Infrarotlaserlicht und Infrarot-Glasfasern für Telekommunikationsaufgaben verwendet werden. Nebenbei ist auch der Laserschutz für infrarote Lasersysteme weniger kritisch, im Vergleich zu UV-Lasersystemen. Das so erzeugte Laserlicht kann dann vor der Optik vorzugsweise mit einem Frequenzkonverter (wie beispielsweise einem nichtlinearen optischen Kristall) in Laserlicht mit einer Wellenlänge in einem Bereich von 325 bis 600 nm umgewandelt werden.

Das Laserlicht beziehungsweise der wenigstens eine Laser kann beispielsweise gepulst oder kontinuierlich sein.

Das Laserlicht beziehungsweise der wenigstens eine Laser strahlt vorzugsweise in Längsrichtung des Liners in das optische Element.

Vorzugsweise wird bei dem erfindungsgemäßen Verfahren Laserlicht mit einer Intensität bei einem Dauerstrahl oder mittleren Intensität bei gepulstem Laserlicht in einem Bereich von 10⁹ bis 10¹⁶ W/m² eingesetzt. Die Intensität ist üblicherweise definiert als Leistung pro Fläche, also Watt pro Quadratmeter, also W/m². Die Pulsdauer des Lasers liegt vorzugsweise in einem Bereich von 10 bis 350 Femtosekunden. Die Pulsenergie des Lasers liegt vorzugsweise in einem Bereich von 1 bis 20 mJ (Millijoule). Die Wiederholrate des Lasers liegt vorzugsweise in einem Bereich von 0,1 bis 50 kHz.

### Optik

Die Optik kann reflektiv, refraktiv und/oder diffraktiv sein.

Wird das Laserlicht von mehreren Lasern erzeugt, so können vor allem dann auch mehrere Optiken eingesetzt werden.

Durch die Optik breitet sich das Laserlicht vorzugsweise auf der Oberfläche eines Kegels aus. Dadurch wird ein eine ringförmige Belichtung auf der Innenseite des Liners erzeugt.

Der Winkel kann vorzugsweise in einem Bereich von 5° bis 150°, ganz besonders bevorzugt in einem Bereich von 10° bis 85° liegen.

Die Optik kann einen rotierenden Spiegel umfassen. Dadurch kann ein Laserstrahl während des Bewegens der Vorrichtung so abgelenkt werden, dass der Laserstrahl auf die Innenwand des aufgestellten Liners trifft und so das Harzsystem aushärten kann. Der Winkel des Spiegels liegt relativ zur Richtung des Laserstrahls vor dem Spiegel vorzugsweise in einem Bereich von +/- 0,1° bis 89,9°, ganz besonders bevorzugt in einem Bereich von 30° bis 60 °.

Vorzugsweise umfasst die wenigstens eine Optik wenigstens ein Axicon, mit dem ein ringförmiges Strahlprofil eines Laserstrahls erzeugt wird, das auf die Innenwand des aufgestellten Liners trifft. So kann das Harzsystem aushärten. Insbesondere bevorzugt beinhaltet die Optik keinerlei galvanometrische oder rotierende Elemente. Axicons sind konische Linsen, welche ein ringförmiges Strahlprofil erzeugen. Axicons haben bei der Aushärtung eines Liners den Vorteil, dass die Laserquelle tatsächlich außerhalb des Liners liegen kann und so die Unfallgefahr in dem Liner selbst beim Aushärten minimiert werden kann. Zudem ist das Einbringen der Optik viel einfacher und schneller, als es aktuell mit den UV-Lichterketten der Fall ist. Zudem gibt es im Unterschied zum Stand der Technik auch kaum Temperaturentwicklung durch die Lichtquelle im Liner. Zudem können mit dieser Technologie Liner in Rohren mit wesentlich geringeren Durchmessern ausgehärtet werden. Das Axicon kann konvex oder konkav sein. Der Öffnungswinkel des Axicon bzw. des austretenden Lichtkegels liegt vorzugsweise in einem Bereich von 1° bis 180°, ganz besonders bevorzugt in einem Bereich von 20° bis 150°, noch weiter bevorzugt in einem Bereich von 40° bis 130°. Der Öffnungswinkel des Axicon ist definiert als der begrenzende Winkel des ausfallenden Lichtes. Dieser Öffnungswinkel des Axicon bzw. des austretenden Lichtkegels ist daher doppelt so groß wie der Winkel des ausfallenden Lichtes relativ zum einfallenden Laserstrahl (wie beispielsweise in Schritt c., auch Deflection Angle).

Die Optik kann vorzugsweise auch wenigstens zwei Axicons umfassen. Dabei kann ein Axicon konkav und ein Axicon konvex sein. Durch die Variation des Abstandes der beiden Axicons zueinander, kann der Durchmesser des Rings für eine optimale Leistungsverteilung eingestellt werden.

Das Material des wenigstens einen Axicon ist vorzugsweise Glas (insbesondere Quarzglas) oder Kunststoff.

Der Durchmesser des Axicon liegt vorzugsweise in einem Bereich von 2 bis 600 mm, ganz besonders bevorzugt in einem Bereich von 20 bis 50 mm. Der Durchmesser des Axicon ist vorzugsweise größer als der Durchmesser des Laserstrahls.

Die Randdicke des Axicon liegt vorzugsweise in einem Bereich von 2 bis 10 mm.

Die Optik kann auch wenigstens ein Diffraktives Optisches Element (DOE) umfassen. Damit kann beispielsweise der Laserstrahl geformt werden.

### Verwendung

In einer weiteren Ausführungsform wird die der Erfindung zu Grunde liegende Aufgabe durch die Verwendung wenigstens eines Axicon zur Erzeugung eines ringförmigen

Strahlprofils eines Laserstrahls zur Aushärtung eines Liners zur Sanierung von Rohren oder Kanälen gelöst.

### Ausführungsbeispiel

Es wurde ein handelsüblicher harzimprägnierter und mit UV-Licht auszuhärtender Liner hergestellt, wie er beispielsweise in EP2573442A1 beschrieben ist. Es wurde so ein Rohr mit einem Durchmesser von 300 mm mit einem Liner einer Wandstärke von 4 mm ausgekleidet. Das verwendete Harzsystem (beispielsweise L050-LCW-03 FC von AOC) enthielt 0,1 Gew.% Irgacure 819 als Photoinitiator. Der Liner wurde bei der Sanierung in das zu sanierende Rohr eingezogen und anschließend mit Druckluft aufgestellt. Mit einem Ti³⁺ :Al₂O₃ Laseroszillator mit regenerativem Verstärker und einem nachgeschalteten optisch parametrischen Oszillator (OPA vom Typ TOPAS Prime von der Firma Coherent Inc., Titansaphirlaser Astrella der Firma Coherent Inc., HE Version mit 6 mJ; Wiederholrate 1 kHz; mittlere Leistung bei 1 W, Pulspeakintensität: 3x10¹⁵ W/m², Pulsdauer 40 Femtosekunden;) wurde ein Laserstrahl erzeugt. Die Wellenlänge am Ausgang des OPA betrug 450 nm. Der Laserstrahl wurde durch ein 100 m langes hierfür übliches Glasfaserkabel in ein Axicon mit einem Öffnungswinkel (zweifacher Deflection Angle) von 59,8° geleitet (Hersteller Thorlabs; Typ:AX1240-A, Durchmesser 1/2", Physical Angle: 40°, Deflection Angle: 29.9°, Center Thickness 10.3 mm, AR Coating 350 - 700 nm R_{avg}<0.5%.

Der Deflection Angle wurde bei 532 nm gemessen), das den Laserstrahl ringförmig auf die Innenwand des aufgestellten Liners projiziert hat. Das Axicon wurde dabei mit einem Rollwagen etwa konzentrisch im aufgestellten Liner durch den ganzen Liner gezogen, so dass das ringförmige Laserlicht die gesamte Innenwand des Liners belichtet hat. Die Geschwindigkeit wurde auf 3,6 mm pro Minute festgesetzt.

Dadurch konnte der Photoinitiator aktiviert werden und das Harz ausgehärtet werden.

Die in der vorliegenden Beschreibung und in den Ansprüchen offenbarten Merkmale der Erfindung können sowohl einzeln als auch in beliebigen Kombinationen für die Verwirklichung der Erfindung in ihren verschiedenen Ausführungsformen wesentlich sein. Die Erfindung ist nicht auf die beschriebenen Ausführungsformen beschränkt. Sie kann im Rahmen der Ansprüche und unter Berücksichtigung der Kenntnisse des zuständigen Fachmanns variiert werden.

## Patentansprüche

1. Verfahren zum Aushärten eines Liners zur Sanierung von Rohren oder Kanälen, bei dem man folgende Schritte ausführt:
a. Einbringen eines Liners umfassend wenigstens einen harzgetränkten Faserschlauch in das zu sanierende Rohr oder den zu sanierenden Kanal,
b. Aufstellen des Liners durch Andrücken des Liners an die Innenwand des zu sanierenden Rohrs oder Kanals, und
c. Aushärten des Harzsystems im harzgetränkten Faserschlauch, indem man eine Vorrichtung durch den aufgestellten Liner bewegt, wobei in der Vorrichtung Laserlicht durch wenigstens eine Optik in einem Winkel von 0,5 bis 179° so abgelenkt wird, dass das Laserlicht auf die Innenwand des aufgestellten Liners trifft und so das Harzsystem im Faserschlauch aushärten kann.

2. Verfahren gemäß Anspruch 1, **dadurch gekennzeichnet, dass** die Optik ein Axicon beinhaltet, mit der ein ringförmiges Strahlprofil eines Laserstrahls erzeugt wird, das auf die Innenwand des aufgestellten Liners trifft.

3. Verfahren gemäß einem der vorhergehenden Ansprüche, **dadurch gekennzeichnet, dass** die Optik mit einer Laserquelle durch eine Lichtleitung verbunden ist.

4. Verfahren gemäß einem der vorhergehenden Ansprüche 2 oder 3, **dadurch gekennzeichnet, dass** der Durchmesser des Axicon in einem Bereich von 5 bis 50 mm liegt.

5. Verfahren gemäß einem der vorhergehenden Ansprüche 2 bis 4, **dadurch gekennzeichnet, dass** der Öffnungswinkel des wenigstens einen Axicon in einem Bereich von 20° bis 150° liegt.

6. Verfahren gemäß einem der vorhergehenden Ansprüche, **dadurch gekennzeichnet, dass** die Optik ein Diffraktives Optisches Element umfasst.

7. Verfahren gemäß einem der vorhergehenden Ansprüche, **dadurch gekennzeichnet, dass** die Optik wenigstens zwei Axicons umfasst.

8. Verfahren gemäß einem der vorhergehenden Ansprüche, **dadurch gekennzeichnet, dass** die Wellenlänge des Lasers in einem Bereich von 325 bis 600 nm liegt.

9. Verfahren gemäß einem der vorhergehenden Ansprüche, **dadurch gekennzeichnet, dass** das Harzsystem einen Photoinitiators enthält und ein Absorptionsmaximum des Photoinitiators in einem Bereich von 325 bis 600 nm liegt.

10. Verfahren gemäß einem der vorhergehenden Ansprüche, **dadurch gekennzeichnet, dass** von wenigstens einem Laser ein Laserlicht mit einer Wellenlänge in einem Bereich von 975 bis 1800 nm erzeugt wird, und das Laserlicht vor dem Eintritt in die Optik mit Hilfe eines Frequenzkonverters in ein Laserlicht mit einer Wellenlänge in einem Bereich von 325 bis 600 nm umgewandelt wird.

11. Verwendung wenigstens eines Axicon zur Erzeugung eines ringförmigen Strahlprofils eines Laserstrahls zur Aushärtung eines Liners zur Sanierung von Rohren oder Kanälen.
